# EUROPEAN PATENT SPECIFICATION

(11) **EP 2 719 209 B1**
(45) Date of publication and mention of the grant of the patent: **05.04.2017**
(21) Application number: 12730317.0
(22) Date of filing: 13.06.2012
(51) Int. Cl.: H04W 8/00

(54) **METHOD AND APPARATUS FOR ENHANCED DISCOVERY IN PEER-TO-PEER NETWORKS BY SYNCHRONIZED DISCOVERY WAKE UP**
VERFAHREN UND VORRICHTUNG ZUR VERBESSERTEN ENTDECKUNG IN PEER-TO-PEER-NETZWERKEN MITTELS SYNCHRONISIERTER ENTDECKUNGSAUFWACHFUNKTION
PROCÉDÉ ET APPAREIL D'AMÉLIORATION DE LA DÉCOUVERTE DANS DES RÉSEAUX D'HOMOLOGUE À HOMOLOGUE PAR ÉVEIL DE DÉCOUVERTE SYNCHRONISÉ

(30) Priority: 13.06.2011 US 201161496513 P; 12.06.2012 US 201213494057
(43) Date of publication of application: 16.04.2014
(73) Proprietor: Qualcomm Incorporated, San Diego, CA 92121 (US)
(72) Inventor: SAMPATH, Hemanth, San Diego, CA 92121-1714 (US); JONES, Vincent, Knowles, IV., San Diego, CA 92121-1714 (US); AGRAWAL, Avneesh, San Diego, CA 92121-1714 (US); ABRAHAM, Santosh, Paul, San Diego, CA 92121-1714 (US)
(74) Representative: Wegner, Hans
(86) International application number: PCT/US2012/042301
(87) International publication number: WO 2012/174150

(56) References cited:
- US-A1- 2006 248 197
- US-A1- 2008 004 044
- US-A1- 2008 049 700
- US-A1- 2010 172 275

## Description

### BACKGROUND

The present Application for Patent claims benefit of U.S. Provisional Patent Application Serial No. 61/496,513, entitled, "Method and apparatus for enhanced discovery in peer-to-peer networks by synchronized discovery wake up", filed June 13, 2011 and assigned to the assignee hereof

### Field

Certain aspects of the present disclosure generally relate to wireless communications and, more particularly, to a method and an apparatus for enhanced discovery in peer-to-peer (P2P) wireless networks by synchronized discovery wake up.

### Background

A peer-to-peer (P2P) wireless network is designed to operate in a manner where all devices share a common wireless resource (i.e., a spectrum) for both receive and transmit operations (i.e., time-division duplex scheme). A key objective of the P2P network is to facilitate discovery. i.e., the act of discovering devices in the radio frequency (RF) vicinity that a terminal can make a connection with (i.e., receive from and transmit to). The interconnection of P2P devices constitutes the network.

Due to a need for power save (e.g., to maximize battery life), P2P devices (or Wireless Local Area Network (WLAN) devices) may be in a sleep state for most of the time, except for intervals where they are needed to send packets or when they are informed about potential traffic to be received through a beacon. WLAN technology can be utilized to facilitate peer-to-peer communication between nodes that are equipped with a WLAN modem. A scheme in which a Wi-Fi enabled device conserves power by only attempting peer discovery at certain times is described in US 2010/0172275 A1. Also, US 2006/0248197 A1 describes a scheduling protocol for minimizing energy costs. In US 2008/0049700 A1 a node is described that can determine a network operational period to go into a power-saving mode until the start of the network operational period. However, a considerable delay may be incurred to discover a WLAN node that often goes into the sleep state. The node initiating the discovery procedure may need to continuously "ping" the node until it wakes up and responds to the ping. Delays in discoverability may limit the effectiveness of peer-to-peer communication for delay sensitive traffic. Hence, there is a need for efficient schemes to reduce such delays in discoverability.

### SUMMARY

This need is fulfilled by the subject-matter of the independent claims. Certain aspects of the present disclosure provide an apparatus for wireless communications. The apparatus generally includes a first circuit configured to obtain one or more time instants, a second circuit configured to wake up the apparatus to discover one or more other apparatuses for communication, wherein the wake up occurs at the one or more time instants synchronized between the apparatus and the one or more other apparatuses, and a third circuit configured to update the one or more time instants according to location information of the apparatus, wherein an application of the apparatus triggers the wake up of the apparatus at the one or more time instants, and the application triggers the wake up based on a universal time available at the apparatus.

Certain aspects of the present disclosure provide a method for wireless communications. The method generally includes obtaining, at an apparatus, one or more time instants, waking up the apparatus to discover one or more other apparatuses for communication, wherein the wake up occurs at the one or more time instants synchronized between the apparatus and the one or more other apparatuses, and updating the one or more time instants according to location information of the apparatus.

Certain aspects of the present disclosure provide an apparatus for wireless communications. The apparatus generally includes means for obtaining one or more time instants, means for waking up the apparatus to discover one or more other apparatuses for communication, wherein the wake up occurs at the one or more time instants synchronized between the apparatus and the one or more other apparatuses, and means for updating the one or more time instants according to location information of the apparatus.

Certain aspects of the present disclosure provide a computer-program product for wireless communications by an apparatus. The computer-program product includes a computer-readable medium comprising instructions executable to obtain one or more time instants, wake up the apparatus to discover one or more other apparatuses for communication, wherein the wake up occurs at the one or more time instants synchronized between the apparatus and the one or more other apparatuses, and update the one or more time instants according to location information of the apparatus.

Certain aspects of the present disclosure provide an access terminal. The access terminal generally includes at least one antenna, a first circuit configured to obtain one or more time instants, a second circuit configured to wake up the access terminal to discover one or more apparatuses for communication, wherein the wake up occurs at the one or more time instants synchronized between the access terminal and the one or more apparatuses, a transceiver configured to communicate, upon the discovery via the at least one antenna, with the one or more apparatuses, and a third circuit configured to update the one or more time instants according to location information of the access terminal.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates an example wireless communication system in accordance with certain aspects of the present disclosure.
FIG. 2 illustrates an example system that allows two nodes to communicate in accordance with certain aspects of the present disclosure.
FIG. 3 illustrates an example of a communication device in accordance with certain aspects of the present disclosure.
FIG. 4 illustrates example operations performed by a wireless node in a peer-to-peer (P2P) wireless network in accordance with certain aspects of the present disclosure.
FIG. 4A illustrates example components capable of performing the operations illustrated in FIG. 4.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### AN EXAMPLE WIRELESS COMMUNICATION SYSTEM

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. A TDMA system may implement GSM or some other standards known in the art. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An OFDM system may implement IEEE 802.11 or some other standards known in the art. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA. A SC-FDMA system may implement 3GPP-LTE (3^{rd} Generation Partnership Project Long Term Evolution) or some other standards known in the art.

The teachings herein may be incorporated into (e.g., implemented within or performed by) a variety of wired or wireless apparatuses (e.g., nodes). In some aspects, a node comprises a wireless node. Such wireless node may provide, for example, connectivity for or to a network (e.g., a wide area network such as the Internet or a cellular network) via a wired or wireless communication link. In some aspects, a wireless node implemented in accordance with the teachings herein may comprise an access point or an access terminal.

An access terminal ("AT") may comprise, be implemented as, or known as an access terminal, a subscriber station, a subscriber unit, a mobile station, a remote station, a remote terminal, a user terminal, a user agent, a user device, user equipment, a user station, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), a tablet, an entertainment device (e.g., a music or video device, or a satellite radio), a television display, a flip-cam, a security video camera, a digital video recorder (DVR), a global positioning system device, or any other suitable device that is configured to communicate via a wireless or wired medium.

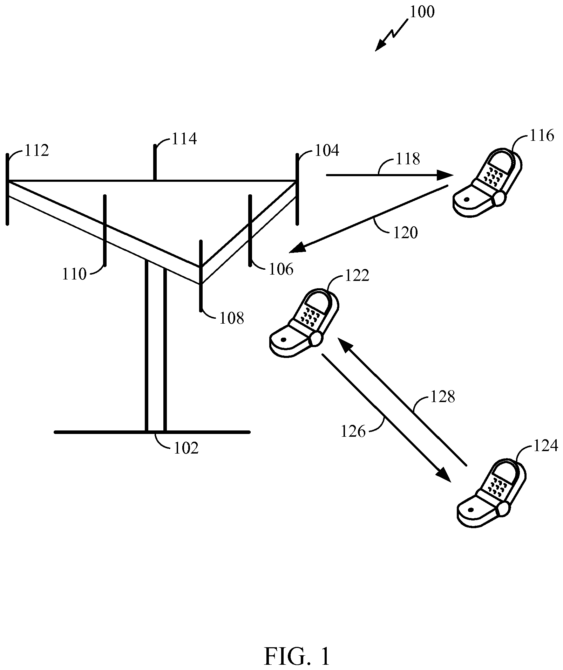

Referring now to FIG. 1, illustrated is a wireless communication system 100 in accordance with various aspects of the present disclosure. The system 100 comprises a base station 102 that can include multiple antenna groups. For example, one antenna group can include antennas 104 and 106, another group can comprise antennas 108 and 110, and an additional group can include antennas 112 and 114. Two antennas are illustrated for each antenna group; however, more or fewer antennas can be utilized for each group. The base station 102 can additionally comprise a transmitter chain and a receiver chain, each of which can in turn comprise a plurality of components associated with signal transmission and reception (e.g., processors, modulators, multiplexers, demodulators, demultiplexers, antennas, and so forth), as will be appreciated by one skilled in the art. Additionally, the base station 102 can be a home base station, a Femto base station, and/or the like.

The base station 102 can communicate with one or more devices such as a device 116; however, it is to be appreciated that base station 102 can communicate with substantially any number of devices similar to the device 116. As depicted, the device 116 is in communication with antennas 104 and 106, where antennas 104 and 106 transmit information to the device 116 over a forward link 118 and receive information from the device 116 over a reverse link 120. In a frequency division duplex (FDD) system, the forward link 118 can utilize a different frequency band than that used by the reverse link 120, for example. Further, in a time division duplex (TDD) system, the forward link 118 and the reverse link 120 can utilize a common frequency band.

In addition, devices 122 and 124 can be communicating with one another, such as in a peer-to-peer configuration. Moreover, the device 122 is in communication with the device 124 using links 126 and 128. In a peer-to-peer ad hoc network, devices within range of each other, such as devices 122 and 124, communicate directly with each other without the base station 102 and/or a wired infrastructure to relay their communication. Additionally, peer devices or nodes can relay traffic. The devices within the network communicating in a peer-to-peer manner can function similar to base stations and relay traffic or communications to other devices, functioning similar to base stations, until the traffic reaches its ultimate destination. The devices can also transmit control channels, which carry information that can be utilized to manage the data transmission between peer nodes.

A communication network can include any number of devices or nodes that are in wireless (or wired) communication. Each node can be within range of one or more other nodes and can communicate with the other nodes or through utilization of the other nodes, such as in a multi-hop topography (e.g., communications can hop from node to node until reaching a final destination). For example, a sender node may wish to communicate with a receiver node. To enable packet transfer between sender node and receiver node, one or more intermediate nodes can be utilized. It should be understood that any node can be a sender node and/or a receiver node and can perform functions of either sending and/or receiving information at substantially the same time (e.g., can broadcast or communicate information at about the same time as receiving information) or at different times.

The system 100 can be configured to allow nodes that have initiated a communication session over a network to move the session to a direct connection. Nodes that are directly connected can exchange packets natively without any encapsulation. In accordance with some aspects, a "homeless" node can switch to a wireless network without losing its ongoing sessions. By "homeless" it is meant a node that does not have any home agent entity to provide assistance for keeping ongoing sessions alive while switching to foreign networks nor to forward any new incoming request(s) to establish new sessions to the node's current location. In accordance with some aspects, nodes can be mobile (e.g., wireless), static (e.g., wired), or combinations thereof (e.g., one node static and a second node mobile, both nodes mobile, and so forth).

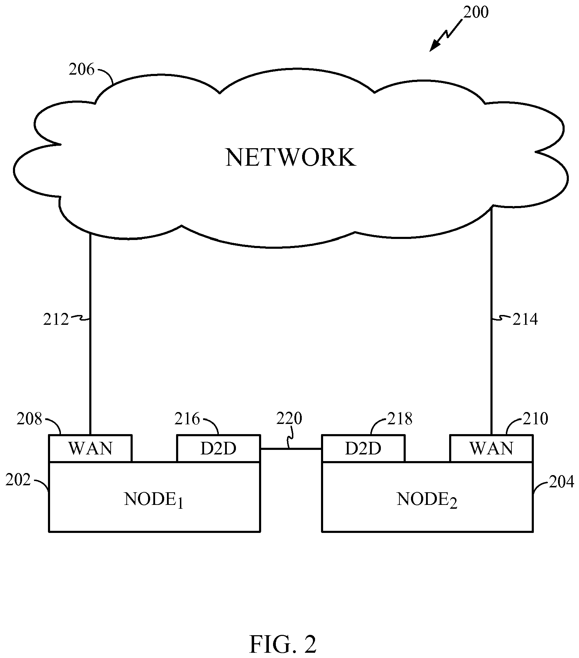

FIG. 2 illustrates a system 200 that allows two nodes to communicate over a Wide Area Network interface and/or a Device to Device interface, according to various aspects. Included in the system 200 are a first node (Node₁) 202 and a second node (Node₂) 204. Each of the nodes 202, 204 may comprise at least two interfaces. A first interface can be connected to a network 206 that provides Internet Protocol (IP) addresses. For example, the network can be a Wide Area Network (WAN), a Local Area Network (LAN), a home network, Digital Subscriber Line (DSL), cable, 3GPP based, 3GPP2 based, or any other technology providing interconnectivity and routing to a network of interest (e.g., the Internet).

Interfaces of nodes 202 and 204 can be wired (e.g., Device to Device), wireless (e.g., WAN), or combinations thereof. For example, Node₁ 202 interface can be wireless and Node₂ 204 interface can be wired, or Node₂ 204 interface can be wireless and Node₁ 202 interface can be wired, both interfaces 202 and 204 can be wireless, or both interfaces 202 and 204 can be wired.

For illustration purposes, the first interface of each of the nodes 202, 204 is a WAN interface, 208 and 210. WAN interfaces 208, 210 may provide a connection over network 206, illustrated by links 212 and 214. Further, each of the nodes 202, 204 may comprise at least a second interface that is connected to a local network with directly connected peers or a multi-hop mesh network. For example, the local network can be a Wireless Local Area Network (WLAN) or another device to device (e.g., peer to peer) technology. For illustration purposes, the second interface of each of the nodes 202, 204 is illustrated as a Device to Device (D2D) interface 216, 218. The D2D interfaces 216, 218 allow nodes 202, 204 to perform direct communications, illustrated by direct link 220.

A procedure according to various aspects for starting a session over network 206 and moving to a direct session (e.g., over direct link 220) will now be described. For example purposes, it is assumed that Node₁ 202 utilizes Mobile Internet Protocol. Communications are performed by Node₁ 202 utilizing its Mobile IP home address as a source address. A home address is a unicast routable address assigned to a node and is used as the permanent address of the node. Node₁ 202 communicates with Node₂ 204 over network 206 (e.g., WAN) by sending and receiving packets over respective first interfaces (e.g., WAN interfaces 208, 210). The packets can be encapsulated in a MIPv6 tunnel to a home agent, which can be included in network 206 according to various aspects, or a route optimization tunnel directly to Node₂ 204.

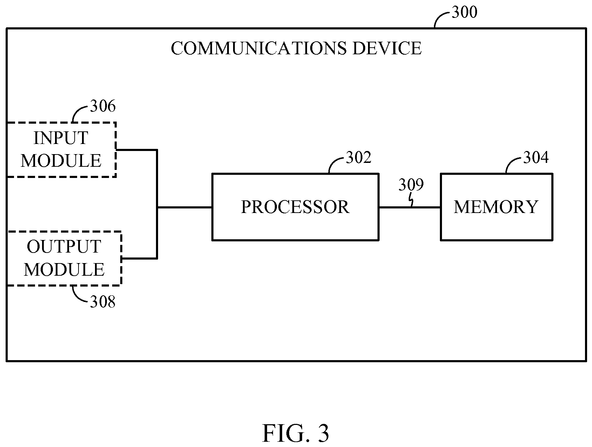

FIG. 3 illustrates an exemplary first communications device 300 in accordance with an exemplary aspect of the present disclosure. The exemplary first communications device 300 may be, e.g., one of the wireless communications devices (102, 116, 122, 124) of FIG. 1 or one of the wireless communications devices (202, 204) of FIG. 2.

The first communications device 300 may comprise a processor 302 and a memory 304 coupled together via a bus 309 over which the various elements (302, 304) may interchange data and information. The first communications device 300 may further comprise an input module 306 and an output module 308 which may be coupled to the processor 302 as shown. However, in some aspects, the input module 306 and the output module 308 are located internal to the processor 302. The input module 306 can receive input signals. The input module 306 can, and in some aspects does, comprise a wireless receiver and/or a wired or optical input interface for receiving input. The output module 308 may comprise, and in some aspects does comprise, a wireless transmitter and/or a wired or optical output interface for transmitting output.

The processor 302 may be configured to: receive a first signal from a second communications device; generate a first application alert if said first signal satisfies an application alert criteria; and receive a second signal from an access point said second signal carrying second communications device information based on a previous signal from the second communications device. The access point may be, and sometimes is, a base station. In some aspects, the second communications device information is location information. In various aspects, the processor 302 is configured to receive said first signal via a wireless peer to peer interface as part of being configured to receive a first signal. In some aspects, the processor 302 is configured to receive the second signal via a wireless wide area network interface as part of being configured to receive the second signal.

The processor 302 may be further configured to determine an operation to take based on the second communications device information included in the second signal and information included in said first signal. In one exemplary aspect, said second communications device information included in the second signal is information on a previous location of said second communications device, said information included in the first signal is current location information, and said operation is one of a location based traffic update operation or a location based advertisement update operation. The processor 302, in some aspects, may be further configured to send an information request signal to the access point requesting information corresponding to the second communications device, in response to the generated first application alert.

### SYNCHRONIZED DISCOVERY WAKE UP

Certain aspects of the present disclosure support time synchronization in peer-to-peer networks (e.g., the peer-to-peer network 200 from FIG. 2) for allowing devices communicating in a peer-to-peer fashion (e.g., the nodes 116, 122, 124 from FIG. 1, and/or the nodes 202, 204 from FIG. 2, and/or the first communications device 300 from FIG. 3 communicating with the second communications device) to wake up for discovery at agreed (synchronized) time-intervals.

According to certain aspects of the present disclosure, WLAN (P2P) devices that possess other modems (e.g., cellular device modems) may synchronize a wake up time based on the time obtained from a cellular base station, wherein these wake-up periods may be utilized primarily so that the devices can discover each other. Devices that are issued by a cellular mobile service provider may be programmed to wake up at predetermined intervals or at a particular time of day.

In an aspect of the present disclosure, a social networking application of a WLAN device triggers discovery wake up periods. For example, the discovery wake up periods may be triggered based on universal time, or at times obtained from the social networking provider servers.

In another aspect of the present disclosure, a source of the wake-up timing may be a Global Positioning System (GPS) based time source. For example, a manufacturer may program its devices to wake up at pre-determined intervals or pre-determined times based on the GPS time source. The pre-determined times may also be updated according to the location information, wherein the location information may be obtained from the GPS based time source. Therefore, devices from the manufacturer may discover each other and may communicate with each other using a proprietary protocol.

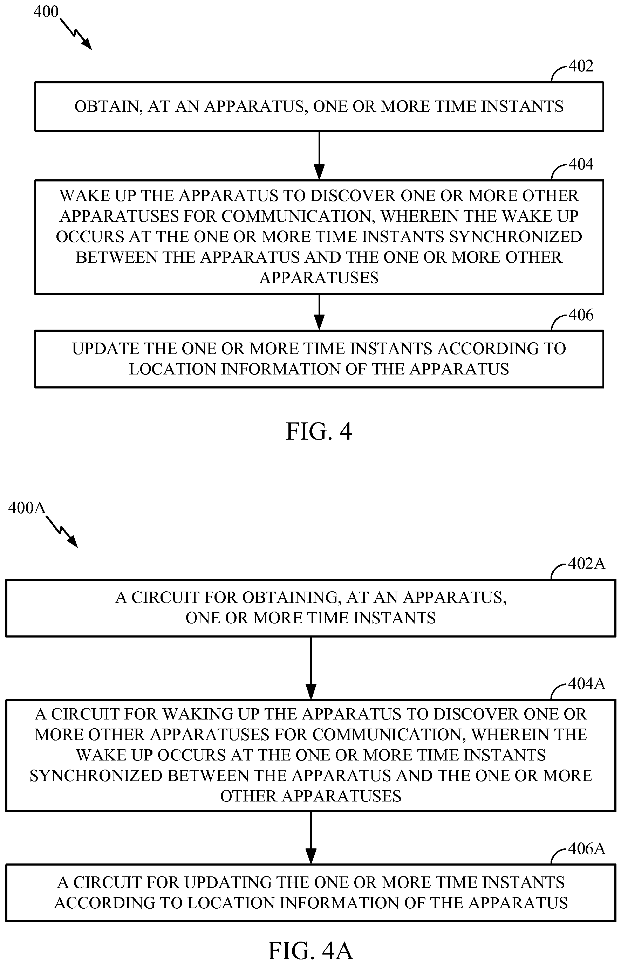

FIG. 4 illustrates example operations 400 performed by an apparatus (e.g., a wireless node or an access terminal) in a peer-to-peer wireless network (e.g., the peer-to-peer network 200 from FIG. 2) in accordance with certain aspects of the present disclosure. At 402, the wireless node may obtain one or more time instants. At 404, the wireless node may be configured to wake up to discover one or more other wireless nodes for communication, wherein the wake up may occur at the one or more time instants synchronized between the wireless node and the one or more other wireless nodes. At 406, the wireless node may be configured to update the one or more time instants according to location information of the wireless node.

In an aspect of the present disclosure, the wireless node may receive information about the one or more time instants from a GPS based time source. The wireless node may further process the information to obtain the one or more time instants. Also, the wireless node may update the one or more time instants according to the location information obtained from the GPS based time source.

In another aspect, the wireless node may receive information about the one or more time instants from a central device serving the wireless node and the one or more other wireless nodes. The wireless node may further process the received information to obtain the one or more time instants. The information may be received using, for example, in-band signaling with the central device.

According to certain aspects of the present disclosure, a central device may comprise, be implemented as, or known as an access point ("AP"), NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology. In some implementations a central device may comprise a set top box kiosk, a media center, or any other suitable device that is configured to communicate via a wireless or wired medium.

In yet another aspect, the wireless node may receive information about the one or more time instants from a cellular device associated with the wireless node. The wireless node may process the received information to obtain the one or more time instants. The information may be received using in-band signaling with the cellular device comprising a cellular base station associated with the wireless node.

According to certain aspects of the present disclosure, a cellular device may comprise, be implemented as, or known as an access point ("AP"), NodeB, eNodeB, Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other suitable device that is configured to communicate via a wireless medium. The cellular device may be designed such that it operates in accordance with at least one of: Code Division Multiple Access (CDMA) technology, Time Division Multiple Access (TDMA) technology, Orthogonal Frequency Division Multiplexing (OFDM) technology, or Orthogonal Frequency Division Multiple Access (OFDMA) technology.

In an aspect, an application of the wireless node may trigger the wake up at the one or more time instants (e.g., based on a universal time available at the wireless node). The application may comprise at least one of: a social networking application, a gaming application, an advertising application, or an instant messaging application. In an aspect, the social networking application obtains information about the one or more time instants from a social networking provider server. The wireless node may receive information about the universal time from a GPS based time source, or from a cellular provider serving the wireless node.

According to certain aspects of the present disclosure, devices in peer-to-peer networks may obtain time-stamps to wake up via GPS based time source. Alternatively, the time-stamps may be obtained via in-band signaling from a central device serving the P2P devices in the network, or from a cellular device associated with the P2P device.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. For example, operations 400 illustrated in FIG. 4 correspond to means 400A illustrated in FIG. 4A.

Means for obtaining may comprise one or more modules and/or circuits of an apparatus configured to obtain information about one or more time instants for waking up. In an aspect, the means for obtaining may comprise an application specific integrated circuit, e.g., the processor 302 of the communications device 300 from FIG. 3. Means for waking up may comprise one or more modules and/or circuits of an apparatus configured to wake up the apparatus to discover one or more other apparatuses for communication, wherein the wake up occurs at the one or more time instants synchronized with the one or more other apparatuses. In an aspect, the means for waking up may comprise an application specific integrated circuit, e.g., the processor 302. Means for updating may comprise one or more modules and/or circuits of an apparatus configured to update the one or more time instants according to location information of the apparatus. In an aspect, the means for updating may comprise an application specific integrated circuit, e.g., the processor 302. Means for receiving information may comprise one or more modules and/or circuits of an apparatus configured to receive information about the one or more time instants from a GPS based time source, to receive, from a central device serving the apparatus and the one or more other apparatuses, information about the one or more time instants, to receive information about the one or more time instants from a cellular device associated with the apparatus, to receive information about the universal time from a GPS based time source, and/or to receive information about the universal time from a cellular provider serving the apparatus. In an aspect, the means for receiving may comprise a receiver, e.g., the input module 306 of the communications device 300 from FIG. 3. Means for processing may comprise one or more modules and/or circuits of an apparatus configured to process information received at the apparatus to obtain one or more time instants at which the apparatus may wake up. In an aspect, the means for processing may comprise an application specific integrated circuit, e.g., the processor 302. Means for communicating may comprise one or more modules and/or circuits of an apparatus configured to establish communication between the apparatus and one or more other apparatuses using a proprietary protocol. In an aspect, the means for communicating may comprise a transceiver, e.g., the input and output modules 306, 308 of the communications device 300.

As used herein, the term "determining" encompasses a wide variety of actions. For example, "determining" may include calculating, computing, processing, deriving, investigating, looking up (e.g., looking up in a table, a database or another data structure), ascertaining, and the like. Also, "determining" may include receiving (e.g., receiving information), accessing (e.g., accessing data in a memory), and the like. Also, "determining" may include resolving, selecting, choosing, establishing, and the like.

As used herein, a phrase referring to "at least one of" a list of items refers to any combination of those items, including single members. As an example, "at least one of: *a, b,* or *c*" is intended to cover: *a, b, c, a-b, a-c, b-c, and a-b-c.*

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM, and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

In the following, further examples are described to facilitate the understanding of the invention:
1. An apparatus for wireless communications, comprising:
   a first circuit configured to obtain one or more time instants;
   a second circuit configured to wake up the apparatus to discover one or more other apparatuses for communication, wherein the wake up occurs at the one or more time instants synchronized between the apparatus and the one or more other apparatuses; and
   a third circuit configured to update the one or more time instants according to location information of the apparatus.
2. The apparatus of example 1, further comprising:
   a receiver configured to receive information about the one or more time instants from a Global Positioning System (GPS) based time source, wherein
   the first circuit is also configured to process the information to obtain the one or more time instants.
3. The apparatus of example 1, wherein the location information of the apparatus is obtained from a Global Positioning System (GPS) based time source.
4. The apparatus of example 1, further comprising:
   a receiver configured to receive, from a central device serving the apparatus and the one or more other apparatuses, information about the one or more time instants, wherein
   the first circuit is also configured to process the information to obtain the one or more time instants.
5. The apparatus of example 1, further comprising:
   a receiver configured to receive information about the one or more time instants from a cellular device associated with the apparatus, wherein
   the first circuit is also configured to process the information to obtain the one or more time instants.
6. The apparatus of example 5, wherein the information is received using in-band signaling with the cellular device comprising a cellular base station associated with the apparatus.
7. The apparatus of example 5, wherein the cellular device operates in accordance with at least one of: Code Division Multiple Access (CDMA) technology, Time Division Multiple Access (TDMA) technology, Orthogonal Frequency Division Multiplexing (OFDM) technology, or Orthogonal Frequency Division Multiple Access (OFDMA) technology.
8. The apparatus of example 1, wherein an application of the apparatus triggers the wake up of the apparatus at the one or more time instants.
9. The apparatus of example 8, wherein the application comprises at least one of: a social networking application, a gaming application, an advertising application, or an instant messaging application.
10. The apparatus of example 9, wherein the social networking application obtains information about the one or more time instants from a social networking provider server.
11. The apparatus of example 8, wherein the application triggers the wake up based on a universal time available at the apparatus.
12. The apparatus of example 11, further comprising:
   a receiver configured to receive information about the universal time from a Global Positioning System (GPS) based time source or from a cellular provider serving the apparatus.
13. The apparatus of example 1, wherein, upon the discovery, the apparatus communicates with the one or more other apparatuses using a proprietary protocol.
14. A method for wireless communications, comprising:
   obtaining, at an apparatus, one or more time instants;
   waking up the apparatus to discover one or more other apparatuses for communication, wherein the wake up occurs at the one or more time instants synchronized between the apparatus and the one or more other apparatuses; and
   updating the one or more time instants according to location information of the apparatus.
15. The method of example 14, further comprising:
   receiving information about the one or more time instants from a Global Positioning System (GPS) based time source; and
   processing the information to obtain the one or more time instants.
16. The method of example 14, wherein the location information of the apparatus is obtained from a Global Positioning System (GPS) based time source.
17. The method of example 14, further comprising:
   receiving, from a central device serving the apparatus and the one or more other apparatuses, information about the one or more time instants; and
   processing the information to obtain the one or more time instants.
18. The method of example 14, further comprising:
   receiving information about the one or more time instants from a cellular device associated with the apparatus; and
   processing the information to obtain the one or more time instants.
19. The method of example 18, wherein the information is received using in-band signaling with the cellular device comprising a cellular base station associated with the apparatus.
20. The method of example 18, wherein the cellular device operates in accordance with at least one of: Code Division Multiple Access (CDMA) technology, Time Division Multiple Access (TDMA) technology, Orthogonal Frequency Division Multiplexing (OFDM) technology, or Orthogonal Frequency Division Multiple Access (OFDMA) technology.
21. The method of example 14, wherein an application of the apparatus triggers the wake up of the apparatus at the one or more time instants.
22. The method of example 21, wherein the application comprises at least one of: a social networking application, a gaming application, an advertising application, or an instant messaging application.
23. The method of example 22, wherein the social networking application obtains information about the one or more time instants from a social networking provider server.
24. The method of example 21, wherein the application triggers the wake up based on a universal time available at the apparatus.
25. The method of example 24, further comprising:
   receiving information about the universal time from a Global Positioning System (GPS) based time source or from a cellular provider serving the apparatus.
26. The method of example 14, wherein, upon the discovery, the apparatus communicates with the one or more other apparatuses using a proprietary protocol.
27. An apparatus for wireless communications, comprising:
   means for obtaining one or more time instants;
   means for waking up the apparatus to discover one or more other apparatuses for communication, wherein the wake up occurs at the one or more time instants synchronized between the apparatus and the one or more other apparatuses; and
   means for updating the one or more time instants according to location information of the apparatus.
28. The apparatus of example 27, further comprising:
   means for receiving information about the one or more time instants from a Global Positioning System (GPS) based time source; and
   means for processing the information to obtain the one or more time instants.
29. The apparatus of example 27, wherein the location information of the apparatus is obtained from a Global Positioning System (GPS) based time source.
30. The apparatus of example 27, further comprising:
   means for receiving, from a central device serving the apparatus and the one or more other apparatuses, information about the one or more time instants; and
   means for processing the information to obtain the one or more time instants.
31. The apparatus of example 27, further comprising:
   means for receiving information about the one or more time instants from a cellular device associated with the apparatus; and
   means for processing the information to obtain the one or more time instants.
32. The apparatus of example 31, wherein the information is received using in-band signaling with the cellular device comprising a cellular base station associated with the apparatus.
33. The apparatus of example 31, wherein the cellular device operates in accordance with at least one of: Code Division Multiple Access (CDMA) technology, Time Division Multiple Access (TDMA) technology, Orthogonal Frequency Division Multiplexing (OFDM) technology, or Orthogonal Frequency Division Multiple Access (OFDMA) technology.
34. The apparatus of example 27, wherein an application of the apparatus triggers the wake up of the apparatus at the one or more time instants.
35. The apparatus of example 34, wherein the application comprises at least one of: a social networking application, a gaming application, an advertising application, or an instant messaging application.
36. The apparatus of example 35, wherein the social networking application obtains information about the one or more time instants from a social networking provider server.
37. The apparatus of example 34, wherein the application triggers the wake up based on a universal time available at the apparatus.
38. The apparatus of example 37, further comprising:
   means for receiving information about the universal time from a Global Positioning System (GPS) based time source or from a cellular provider serving the apparatus.
39. The apparatus of example 27, wherein, upon the discovery, the apparatus communicates with the one or more other apparatuses using a proprietary protocol.
40. A computer-program product for wireless communications by an apparatus, comprising a computer-readable medium comprising instructions executable to:
   obtain one or more time instants;
   waking up the apparatus to discover one or more other apparatuses for communication, wherein the wake up occurs at the one or more time instants synchronized between the apparatus and the one or more other apparatuses; and
   updating the one or more time instants according to location information of the apparatus.
41. An access terminal, comprising:
   at least one antenna;
   a first circuit configured to obtain one or more time instants;
   a second circuit configured to wake up the access terminal to discover one or more apparatuses for communication, wherein the wake up occurs at the one or more time instants synchronized between the access terminal and the one or more apparatuses;
   a third circuit configured to update the one or more time instants according to location information of the access terminal; and
   a transceiver configured to communicate, upon the discovery via the at least one antenna, with the one or more apparatuses.

In the following further examples are described to further facilitate the understanding of this invention.

In a first further example an apparatus for wireless communications is described, the apparatus comprising a first circuit configured to obtain one or more time instants; a second circuit configured to wake up the apparatus to discover one or more other apparatuses for communication, wherein the wake up occurs at the one or more time instants synchronized between the apparatus and the one or more other apparatuses; and a third circuit configured to update the one or more time instants according to location information of the apparatus. The apparatus may further comprise a receiver configured to receive information about the one or more time instants from a Global Positioning System (GPS) based time source, wherein the first circuit is also configured to process the information to obtain the one or more time instants. Further, the location information of the apparatus may be obtained from a Global Positioning System (GPS) based time source. The apparatus may further comprise a receiver configured to receive, from a central device serving the apparatus and the one or more other apparatuses, information about the one or more time instants, wherein the first circuit may also be configured to process the information to obtain the one or more time instants. The apparatus may yet further comprise a receiver configured to receive information about the one or more time instants from a cellular device associated with the apparatus, wherein the first circuit is also configured to process the information to obtain the one or more time instants. Also, the information may be received using in-band signaling with the cellular device comprising a cellular base station associated with the apparatus. Further, the cellular device may operate in accordance with at least one of: Code Division Multiple Access (CDMA) technology, Time Division Multiple Access (TDMA) technology, Orthogonal Frequency Division Multiplexing (OFDM) technology, or Orthogonal Frequency Division Multiple Access (OFDMA) technology. Also, an application of the apparatus may trigger the wake up of the apparatus at the one or more time instants. Further, the application may comprise at least one of: a social networking application, a gaming application, an advertising application, or an instant messaging application. Also, the social networking application may obtain information about the one or more time instants from a social networking provider server. Further, the application may trigger the wake up based on a universal time available at the apparatus. The apparatus may yet further comprise a receiver configured to receive information about the universal time from a Global Positioning System (GPS) based time source or from a cellular provider serving the apparatus. Also, upon the discovery, the apparatus may communicate with the one or more other apparatuses using a proprietary protocol.

In yet another further example a method for wireless communications is described, comprising: obtaining, at an apparatus, one or more time instants; waking up the apparatus to discover one or more other apparatuses for communication, wherein the wake up occurs at the one or more time instants synchronized between the apparatus and the one or more other apparatuses; and updating the one or more time instants according to location information of the apparatus. The method may further comprise receiving information about the one or more time instants from a Global Positioning System (GPS) based time source; and processing the information to obtain the one or more time instants. Also, the location information of the apparatus may be obtained from a Global Positioning System (GPS) based time source. The method may further comprise receiving, from a central device serving the apparatus and the one or more other apparatuses, information about the one or more time instants; and processing the information to obtain the one or more time instants. The method may further comprise: receiving information about the one or more time instants from a cellular device associated with the apparatus; and processing the information to obtain the one or more time instants. Also, the information may be received using in-band signaling with the cellular device comprising a cellular base station associated with the apparatus. Further, the cellular device may operate in accordance with at least one of: Code Division Multiple Access (CDMA) technology, Time Division Multiple Access (TDMA) technology, Orthogonal Frequency Division Multiplexing (OFDM) technology, or Orthogonal Frequency Division Multiple Access (OFDM A) technology. Also, an application of the apparatus may trigger the wake up of the apparatus at the one or more time instants. Further, the application may comprise at least one of: a social networking application, a gaming application, an advertising application, or an instant messaging application. Also, the social networking application may obtain information about the one or more time instants from a social networking provider server. Further, the application may trigger the wake up based on a universal time available at the apparatus. The method may further comprise receiving information about the universal time from a Global Positioning System (GPS) based time source or from a cellular provider serving the apparatus. Also, upon the discovery, the apparatus may communicate with the one or more other apparatuses using a proprietary protocol.

In another further example an apparatus for wireless communications is described, comprising means for obtaining one or more time instants; means for waking up the apparatus to discover one or more other apparatuses for communication, wherein the wake up occurs at the one or more time instants synchronized between the apparatus and the one or more other apparatuses; and means for updating the one or more time instants according to location information of the apparatus. The apparatus may further comprise means for receiving information about the one or more time instants from a Global Positioning System (GPS) based time source; and means for processing the information to obtain the one or more time instants. Also, the location information of the apparatus may be obtained from a Global Positioning System (GPS) based time source. The apparatus may further comprise means for receiving, from a central device serving the apparatus and the one or more other apparatuses, information about the one or more time instants; and means for processing the information to obtain the one or more time instants. The apparatus may further comprise: means for receiving information about the one or more time instants from a cellular device associated with the apparatus; and means for processing the information to obtain the one or more time instants. Also, the information may be received using in-band signaling with the cellular device comprising a cellular base station associated with the apparatus. Further, the cellular device may operate in accordance with at least one of: Code Division Multiple Access (CDMA) technology, Time Division Multiple Access (TDMA) technology, Orthogonal Frequency Division Multiplexing (OFDM) technology, or Orthogonal Frequency Division Multiple Access (OFDMA) technology. Also, an application of the apparatus may trigger the wake up of the apparatus at the one or more time instants. Further, the application may comprise at least one of: a social networking application, a gaming application, an advertising application, or an instant messaging application. Also, the social networking application may obtain information about the one or more time instants from a social networking provider server. Further, the application may trigger the wake up based on a universal time available at the apparatus. Also, the apparatus may further comprise means for receiving information about the universal time from a Global Positioning System (GPS) based time source or from a cellular provider serving the apparatus. Further, upon the discovery, the apparatus may communicate with the one or more other apparatuses using a proprietary protocol.

In another example a computer-program product for wireless communications by an apparatus is described, comprising a computer-readable medium comprising instructions executable to: obtain one or more time instants; waking up the apparatus to discover one or more other apparatuses for communication, wherein the wake up occurs at the one or more time instants synchronized between the apparatus and the one or more other apparatuses; and updating the one or more time instants according to location information of the apparatus.

In yet another example an access terminal is described, comprising at least one antenna; a first circuit configured to obtain one or more time instants; a second circuit configured to wake up the access terminal to discover one or more apparatuses for communication, wherein the wake up occurs at the one or more time instants synchronized between the access terminal and the one or more apparatuses; a third circuit configured to update the one or more time instants according to location information of the access terminal; and a transceiver configured to communicate, upon the discovery via the at least one antenna, with the one or more apparatuses.

## Claims

1. A method for wireless communications, comprising:
obtaining (402), at an apparatus, one or more time instants;
waking up (404) the apparatus to discover one or more other apparatuses for communication, wherein the wake up occurs at the one or more time instants synchronized between the apparatus and the one or more other apparatuses; and the method further **characterized by** the steps of:
updating (406) the one or more time instants according to location information of the apparatus.

2. The method of claim 1, further comprising:
receiving information about the one or more time instants from a Global Positioning System, GPS, based time source; and
processing the information to obtain the one or more time instants.

3. The method of claim 1, wherein the location information of the apparatus is obtained from a Global Positioning System, GPS, based time source.

4. The method of claim 1, further comprising:
receiving, from a central device serving the apparatus and the one or more other apparatuses, information about the one or more time instants; and
processing the information to obtain the one or more time instants.

5. The method of claim 1, further comprising:
receiving information about the one or more time instants from a cellular device associated with the apparatus; and
processing the information to obtain the one or more time instants.

6. The method of claim 5, wherein the information is received using in-band signaling with the cellular device comprising a cellular base station associated with the apparatus.

7. The method of claim 5, wherein the cellular device operates in accordance with at least one of: Code Division Multiple Access, CDMA, technology, Time Division Multiple Access, TDMA, technology, Orthogonal Frequency Division Multiplexing, OFDM, technology, or Orthogonal Frequency Division Multiple Access, OFDM A, technology.

8. The method of claim 1, wherein an application of the apparatus triggers the wake up of the apparatus at the one or more time instants.

9. The method of claim 8, wherein the application comprises at least one of: a social networking application, a gaming application, an advertising application, or an instant messaging application.

10. The method of claim 9, wherein the social networking application obtains information about the one or more time instants from a social networking provider server.

11. The method of claim 8, wherein the application triggers the wake up based on a universal time available at the apparatus.

12. The method of claim 11, further comprising:
receiving information about the universal time from a Global Positioning System, GPS, based time source or from a cellular provider serving the apparatus.

13. The method of claim 1, wherein, upon the discovery, the apparatus communicates with the one or more other apparatuses using a proprietary protocol.

14. An apparatus for wireless communications, comprising:
means for obtaining (402) one or more time instants;
means for waking up (404) the apparatus to discover one or more other apparatuses for communication, wherein the wake up occurs at the one or more time instants synchronized between the apparatus and the one or more other apparatuses; and
**characterized by** further comprising:
means for updating (406) the one or more time instants according to location information of the apparatus.

15. A computer-program product, comprising a computer-readable medium having program code recorded thereon for causing at least one computer to perform a method according to one of the claims 1 to 13 when executed.

## Patentansprüche

1. Ein Verfahren für drahtlose Kommunikation, aufweisend:
Beziehen (402), an einer Vorrichtung, einen oder mehrere Zeitpunkte;
Aufwecken (404) der Vorrichtung, um eine oder mehrere andere Vorrichtungen für die Kommunikation zu entdecken, wobei das Aufwecken auftritt zu den einen oder mehreren Zeitpunkten synchronisiert zwischen der Vorrichtung uns den einen oder mehreren anderen Vorrichtungen; und
das Verfahren ist weiter **gekennzeichnet durch** die Schritte von:
Aktualisieren (406) der einen oder mehreren Zeitpunkte gemäß Ortsinformation von der Vorrichtung.

2. Das Verfahren nach Anspruch 1, weiter aufweisend:
Empfangen von Information über die einen oder mehreren Zeitpunkte von einer auf globalem Positionierungssystem, GPS, basierenden Zeitquelle; und
Verarbeiten der Information, um die einen oder mehreren Zeitpunkte zu erhalten.

3. Das Verfahren nach Anspruch 1, wobei die Ortsinformation von der Vorrichtung bezogen wird von einer auf globalem Positionierungssystem, GPS, basierenden Zeitquelle.

4. Das Verfahren nach Anspruch 1, weiter aufweisend:
Empfangen, von einem zentralen Gerät, das der Vorrichtung und den einen oder mehreren anderen Vorrichtungen dient, von Information über die einen oder mehreren Zeitpunkte; und
Verarbeiten der Information, um die einen oder mehreren Zeitpunkte zu beziehen.

5. Das Verfahren nach Anspruch 1, weiter aufweisend:
Empfangen von Information über die einen oder mehreren Zeitpunkte von einem Mobilgerät verbunden mit der Vorrichtung; und
Verarbeiten der Information, um die einen oder mehreren Zeitpunkte zu beziehen.

6. Das Verfahren nach Anspruch 5, wobei die Information empfangen wird, verwendend bandinterne Signalgebung mit dem Mobilgerät aufweisend eine Mobilfunkbasisstation verbunden mit der Vorrichtung.

7. Das Verfahren nach Anspruch 5, wobei das Mobilgerät in Übereinstimmung arbeitet mit wenigstens einem aus: Codemultiplex-Vielfachzugriff, CDMA, Technologie, Zeitmultiplex-Vielfachzugriff, TDMA, Technologie, Orthogonales Frequenzmultiplexverfahren, OFDM, Technologie, oder Orthogonale Frequenzmultiplexzugriff, OFDM A, Technologie.

8. Das Verfahren nach Anspruch 1, wobei eine Anwendung von der Vorrichtung das Aufwachen der Vorrichtung an den einen oder mehreren Zeitpunkten auslöst.

9. Das Verfahren nach Anspruch 8, wobei die Anwendung wenigstens eines aufweist aus: eine soziale Netzwerkanwendung, eine Spielanwendung, eine Werbeanwendung, oder einen Sofortnachrichtendienst.

10. Das Verfahren nach Anspruch 9, wobei die soziale Netzwerkanwendung Information über die einen oder mehreren Zeitpunkte von einem soziales Netzwerken-Anbieter-Server bezieht.

11. Das Verfahren nach Anspruch 8, wobei die Anwendung das Aufwachen basierend auf einer universellen Zeit, verfügbar für die Vorrichtung, auslöst.

12. Das Verfahren nach Anspruch 11, weiter aufweisend:
Empfangen von Information über die universelle Zeit von einer auf globalem Positionierungssytem, GPS, basierenden Zeitquelle oder von einem Mobilanbieter, der der Vorrichtung dient.

13. Das Verfahren nach Anspruch 1, wobei, nach der Entdeckung, die Vorrichtung kommuniziert mit den einen oder mehreren anderen Vorrichtungen, ein proprietäres Protokoll verwendend.

14. Eine Vorrichtung für drahtlose Kommunikation, aufweisend:
Mittel zum Beziehen (402) eines oder mehrerer Zeitpunkte;
Mittel zum Aufwecken (404) der Vorrichtung, um eine oder mehrere andere Vorrichtungen für die Kommunikation zu entdecken, wobei das Aufwecken auftritt zu den einen oder mehreren Zeitpunkten synchronisiert zwischen der Vorrichtung und den einen oder mehreren anderen Vorrichtungen; und
**gekennzeichnet durch** weiter aufweisend:
Mittel zum Aktualisieren (406) der einen oder mehreren Zeitpunkte gemäß Ortsinformation von der Vorrichtung.

15. Ein Computerprogrammprodukt aufweisend ein computer-lesbares Medium bespielt mit Programmcode zum Veranlassen wenigstens eines Computers, ein Verfahren gemäß einem der Ansprüche 1 bis 13 durchzuführen, wenn es ausgeführt wird.

## Revendications

1. Procédé pour des communications sans fil, comprenant :
l'obtention (402), au niveau d'un appareil, d'un ou de plusieurs instants de temps ;
l'éveil (404) de l'appareil pour découvrir un ou plusieurs autres appareils aux fins de communication, dans lequel le réveil survient au ou aux instants de temps synchronisés entre l'appareil et les un ou plusieurs autres appareils ; et
le procédé étant en outre **caractérisé par** les étapes de :
la mise à jour (406) des un ou plusieurs instants de temps selon des informations d'emplacement de l'appareil.

2. Procédé selon la revendication 1, comprenant en outre :
la réception d'informations au sujet des un ou plusieurs instants de temps d'une source de temps basée sur le système de positionnement mondial, GPS ; et
le traitement des informations pour obtenir les un ou plusieurs instants de temps.

3. Procédé selon la revendication 1, dans lequel les informations d'emplacement de l'appareil sont obtenues d'une source de temps basée sur le système de positionnement mondial, GPS.

4. Procédé selon la revendication 1, comprenant en outre :
la réception, d'un dispositif central servant l'appareil et les un ou plusieurs autres appareils, d'informations au sujet des un ou plusieurs instants de temps ; et
le traitement des informations pour obtenir les un ou plusieurs instants de temps.

5. Procédé selon la revendication 1, comprenant en outre :
la réception d'informations au sujet des un ou plusieurs instants de temps d'un dispositif cellulaire associé à l'appareil ; et
le traitement des informations pour obtenir les un ou plusieurs instants de temps.

6. Procédé selon la revendication 5, dans lequel les informations sont reçues à l'aide d'une signalisation dans la bande avec le dispositif cellulaire comprenant une station de base cellulaire associée à l'appareil.

7. Procédé selon la revendication 5, dans lequel le dispositif cellulaire fonctionne selon au moins une technologie parmi : une technologie d'accès multiple par répartition en code, CDMA ; une technologie d'accès multiple par répartition dans le temps, TDMA ; une technologie de multiplexage par répartition en fréquence orthogonale, OFDM ; ou une technologie d'accès multiple par répartition en fréquence orthogonale, OFDMA.

8. Procédé selon la revendication 1, dans lequel une application de l'appareil déclenche le réveil de l'appareil au ou aux instants de temps.

9. Procédé selon la revendication 8, dans lequel l'application comprend au moins une application parmi :
une application de réseau social, une application de jeu, une application de publicité, une application de messagerie instantanée.

10. Procédé selon la revendication 9, dans lequel l'application de réseau social obtient des informations au sujet des un ou plusieurs instants de temps d'un serveur de fournisseur de réseau social.

11. Procédé selon la revendication 8, dans lequel l'application déclenche le réveil sur la base d'un temps universel disponible au niveau de l'appareil.

12. Procédé selon la revendication 11, comprenant en outre :
la réception d'informations au sujet du temps universel d'une source de temps basée sur le système de positionnement mondial, GPS, ou d'un fournisseur cellulaire servant l'appareil.

13. Procédé selon la revendication 1, dans lequel, lors de la découverte, l'appareil communique avec les un ou plusieurs autres appareils à l'aide d'un protocole propriétaire.

14. Appareil de communications sans fil, comprenant :
un moyen pour obtenir (402) un ou plusieurs instants de temps ;
un moyen pour réveiller (404) l'appareil pour découvrir un ou plusieurs autres appareils aux fins de communication, dans lequel le réveil survient au ou aux instants de temps synchronisés entre l'appareil et les un ou plusieurs autres appareils ; et
**caractérisé en ce qu'**il comprend en outre :
un moyen pour mettre à jour (406) les un ou plusieurs instants de temps selon des informations d'emplacement de l'appareil.

15. Produit-programme d'ordinateur, comprenant un support lisible par ordinateur sur lequel est enregistré un code de programme pour amener au moins un ordinateur à réaliser un procédé selon l'une quelconque des revendications 1 à 13 lorsqu'il est exécuté.
